(19) **Europäisches Patentamt**

**European Patent Office**

**Office européen des brevets**

(11) **EP 1 286 483 A2**

(12) **DEMANDE DE BREVET EUROPEEN**

(43) Date de publication:
    **26.02.2003 Bulletin 2003/09**

(51) Int Cl.⁷: **H04B 10/155**

(21) Numéro de dépôt: **02291995.5**

(22) Date de dépôt: **08.08.2002**

(84) Etats contractants désignés:
    **AT BE BG CH CY CZ DE DK EE ES FI FR GB GR
    IE IT LI LU MC NL PT SE SK TR**
    Etats d'extension désignés:
    **AL LT LV MK RO SI**

(30) Priorité: **23.08.2001  FR 0111046**

(71) Demandeur: **ALCATEL**
    **75008 Paris (FR)**

(72) Inventeurs:
    • **Zami, Thierry**
      **91300 Massy (FR)**
    • **Penninckx, Denis**
      **91620 Nozay (FR)**

(74) Mandataire: **Sciaux, Edmond**
    **COMPAGNIE FINANCIERE ALCATEL**
    **Dépt. Propr. Industrielle,**
    **30, avenue Kléber**
    **75116 Paris (FR)**

(54) **Modulateur optique amélioré permettant une optimisation de la modulation NRZ**

(57)    Modulateur optique pour la transmission de données encodées en mode NRZ par modulation de l'intensité d'un signal lumineux, comprenant des moyens pour mettre en forme ledit signal lumineux incluant des moyens de mise en forme pour obtenir un signal de faible bande passante (618) à partir du signal de commande d'entrée (635) tels qu'un filtre de Bessel du cinquième ordre et une unité de commande électrique (620), et un modulateur laser (610) ayant une fonction de transfert (630) favorisant le taux d'extinction du signal lumineux résultant (640).

FIG. 6

**Description**

La présente invention concerne la technologie des transmissions par fibres optiques, et décrit plus particulièrement un modulateur optique permettant d'améliorer la qualité de ces transmissions assurant ainsi une meilleure détection des signaux transmis en présence de bruit.

Depuis plusieurs décennies les réseaux de télécommunications se sont considérablement développés. Alors que l'essentiel des communications tant en ce qui concerne la voix, et donc le téléphone, que les applications de transport de données, s'est longtemps fait sur des lignes téléphoniques classiques, à faible débit, le formidable développement d'Internet et de tous les réseaux de transport de données, qu'ils soient publiques ou privés, a suscité une énorme demande de bande passante depuis le milieu des années 80. Pour pouvoir faire face à cet accroissement exponentiel de la quantité d'information à transporter et qui concerne tous les types de média, c'est à dire aussi bien le transport de la voix que celui des données tels que le courrier électronique (E-mail), l'échange de fichiers de texte et d'images, la distribution de vidéo et surtout l'utilisation massive d'Internet et du 'World Wide Web' (WWW); de nouvelles technologies ont dû voir le jour, la transmission sur des supports électriques (lignes métalliques, cuivre) s'avérant trop limitée en performance sur de grandes distances.

De fait, l'essentiel des transmissions, à tout le moins en ce concerne le coeur de ces réseaux, se fait maintenant à de très hauts débits sur des fibres optiques. La vitesse d'échange des données, ou bits d'information, se mesure en effet couramment en Gigabits par seconde. C'est à dire que $10^9$, ou un milliard de bits, peuvent être échangés à chaque seconde sur une ligne qui serait donc à 1 Gb/s. En pratique des standards internationaux existent qui normalisent ces transmissions et assurent l'interopérabilité des équipements. Le plus répandu de ces standards est connu sous le nom de SONET pour 'Synchronous Optical NETwork'. Alors que SONET est avant tout un standard Nord-Américain, sa contrepartie Européenne est appelée SDH pour 'Synchronous Digital Hierarchy'. Ces standards sont pour l'essentiel compatibles et normalisent des vitesses de transmission notamment à 2,48 Gb/s (SONET OC-48), 10 Gb/s (SONET OC-192) et aussi 40 Gb/s (SONET OC-768).

Si les échanges entre équipements de communication à travers un réseau, qui peut être très étendu et couvrir une ville, un pays et qui peut comprendre des transmissions intercontinentales, se fait donc maintenant sur des fibres optiques véhiculant des pulses de lumière issus généralement d'un émetteur de lumière cohérente dit LASER, il reste que les équipements de communication eux-mêmes sont encore essentiellement basés sur des technologies électriques et que les circuits périphériques qui les composent doivent être capables d'interfacer efficacement, et à faible coût, les dispositifs émetteurs et récepteurs de signaux lumineux interfacant ces fibres optiques.

Dans sa forme la plus simple, la transmission de signaux binaires, véhiculant les bits d'informations discutés ci-dessus, résulte simplement en une modulation à deux niveaux de l'émetteur de lumière le plus souvent un LASER. Le signal optique est ainsi généré à deux niveaux de puissance et le LASER est commuté d'un niveau où il émet effectivement une quantité suffisante de lumière pour être perçu par le récepteur optique, situé à l'autre extrémité de la fibre, à un niveau ou il n'émet pas ou peu, état dans lequel on doit considérer qu'il est éteint. Le récepteur est ainsi à même de discriminer les deux niveaux correspondant à un bit d'information (le '1' correspondant généralement à l'état où le LASER émet de la lumière bien que la convention inverse soit aussi évidemment possible). Lorsque l'émetteur reste en émission entre deux '1 consécutifs et qu'il ne retourne à l'état éteint que pour transmettre un '0', ce mode de modulation est alors connu sous l'acronyme de 'NRZ' pour 'Non Return to Zero'. Il est peu coûteux et s'adapte bien au mode de fonctionnement des LASERs qui doivent alors simplement être éteints ou allumés pour la transmission de chaque bit d'information.

Cependant, avec l'accroissement considérable des vitesses de transmission requises pour les nouveaux équipements de communication (jusqu'à 40 Gb/s) il devient de plus en plus difficile de contrôler l'allumage ou l'extinction d'un LASER pendant un bref instant et d'assurer la détection correcte par le récepteur de l'information transmise en particulier, et c'est toujours le cas en pratique, en présence de bruit.

C'est pourquoi le but de l'invention est de fournir un modulateur optique améliorée qui, tout en gardant la simplicité de la méthode dite NRZ, apporte une amélioration significative de celle-ci dans la possibilité de mieux détecter les signaux transmis, c'est à dire en obtenant un meilleur rapport signal sur bruit que le NRZ classique.

L'objet de l'invention est donc un modulateur optique pour la transmission de données encodées en mode NRZ par modulation de l'intensité d'un signal lumineux, comprenant des moyens pour mettre en forme le signal lumineux, ces moyens comprenant des moyens de mise en forme pour obtenir un signal de faible bande passante à partir du signal de commande d'entrée, et un modulateur laser ayant une fonction de transfert favorisant le temps d'extinction du signal lumineux résultant.

Selon un aspect important de l'invention, le rapport de la durée de la transition du signal lumineux résultant pour passer du niveau minimum d'intensité lumineuse au niveau maximum d'intensité lumineuse à la durée du temps bit dudit signal, est compris entre 0,1 et 0,6, et le rapport de la durée du temps de maintien au niveau maximum d'intensité à la durée totale du temps bit diminuée de la durée de la transition entre le niveau minimum d'intensité lumineuse et le niveau maximum d'intensité lumineuse, est compris entre 0,1 et 0,85.

Les buts, objets, ainsi que les caractéristiques et avantages de l'invention ressortiront mieux de la description détaillée d'un mode préféré de réalisation de cette dernière. illustré par les dessins d'accompagnement dans lesquels

La FIGURE 1 est un diagramme comparant le mode de modulation dit NRZ à d'autres modes de modulation.

La FIGURE 2 illustre une faiblesse du mode de modulation NRZ traditionnel à laquelle l'invention apporte un remède.

Les FIGURE 3A, 3B, 3C sont des diagrammes montrant comment le mode NRZ est modifié selon l'invention.

La FIGURE 4 est un diagramme représentant le rapport signal sur bruit qui peut être aussi utilisé pour mesurer l'amélioration obtenue.

La FIGURE 5 est un diagramme montrant comment l'amélioration obtenue peut être précisément quantifiée par la mesure du facteur de qualité de la transmission optique.

La FIGURE 6 est un bloc-diagramme illustrant la mise en oeuvre générale de l'invention.

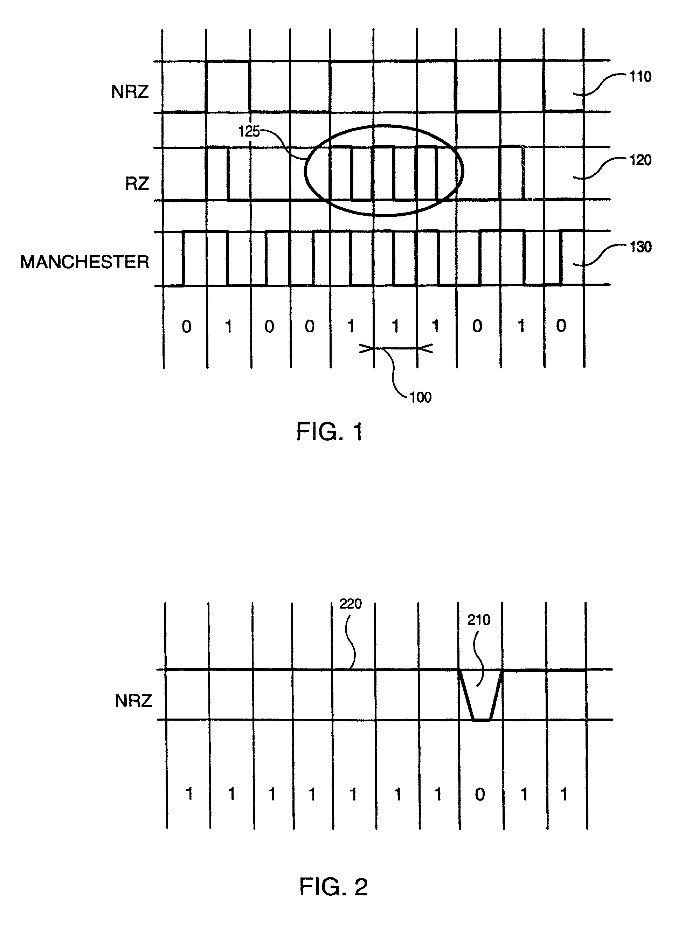

La figure 1 a pour but essentiel de comparer la modulation NRZ (110) à d'autres types de modulation afin d'en mieux apprécier la simplicité et le faible coût qui en résulte lors de son utilisation dans des produits de communication. En particulier, on peut la comparer à un deuxième mode possible de modulation dit RZ (120) pour 'Return to Zero'. Ainsi, au contraire du mode NRZ, lors de la succession d'une transmission de niveaux '1', le dispositif émettant les signaux lumineux est allumé puis éteint à chaque temps bit (100). A l'évidence ceci résulte en un plus grand nombre de transitions (125) dans le signal à transmettre ce qui correspond à une dispersion de l'énergie transmise dans une plus grande gamme de fréquences, phénomène bien connu des spécialistes et que montre bien l'analyse spectrale de tels signaux quand elle est effectuée avec les équipements de mesure appropriés. En d'autres termes le milieu de propagation, la fibre optique en l'occurrence, et le dispositif de réception doivent être à même de pouvoir transmettre et recevoir une modulation comprenant des composantes à fréquences plus élevées, donc être plus performants, pour ne pas altérer les signaux. Un autre type de modulation souvent utilisé également est dit biphase ou est encore appelé code Manchester (130). Il comprend un nombre de transitions encore plus grand puisque à chaque temps bit, '1' ou '0', il y a au moins une transition. Les composantes spectrales de ce mode de modulation sont donc encore plus orientées vers des fréquences élevées et les inconvénients qui en résultent plus accentués. Ainsi, chaque fois que c'est possible, le mode de modulation NRZ est préféré pour sa simplicité et son faible coût de mise en oeuvre.

La figure 2 illustre cependant une difficulté de la modulation NRZ en particulier quand un symbole '0' (210) doit être transmis alors qu'il est inclus dans une longue suite de '1' (220). Du fait de l'interaction entre les symboles, notamment après le filtre électrique du récepteur, l'extinction de l'émetteur de lumière se réalise moins bien ce qui rend donc plus difficile la détection du symbole '0' isolé par le récepteur distant. En d'autres termes, le taux d'extinction du signal après filtrage électrique s'en trouve dégradé. L'invention se propose donc d'apporter une amélioration à la modulation NRZ sur ce point afin d'en élargir le champs d'application évitant ainsi d'avoir recours à d'autres modes de modulation comme la modulation RZ qui, si elle assure une claire séparation des symboles '1' où l'émetteur est actif, a cependant les inconvénients cités précédemment.

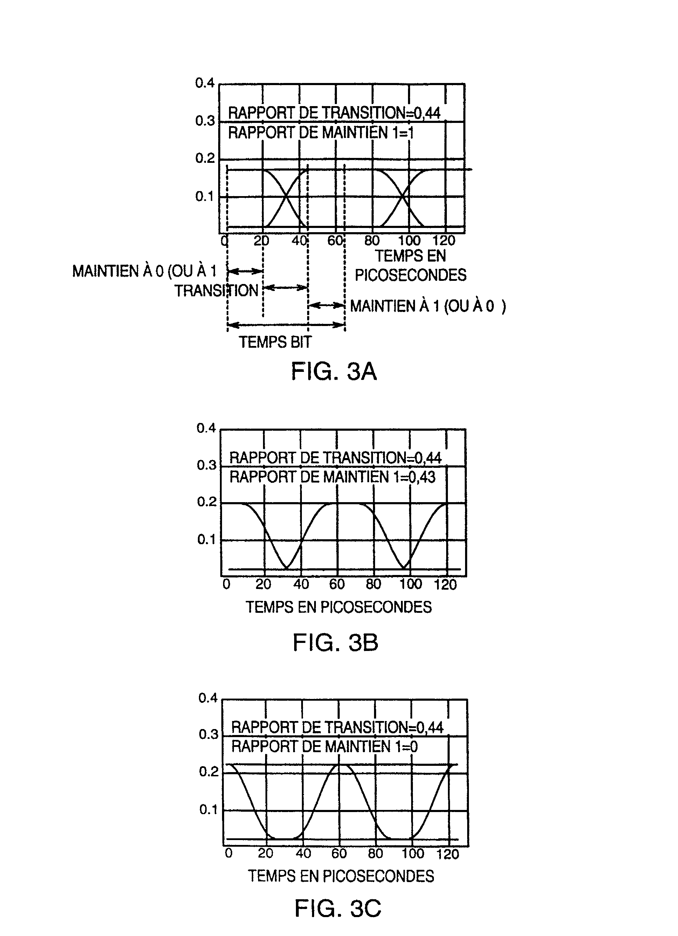

Les figures 3A, 3B, 3C montrent comment les signaux transmis doivent être modifiés selon l'invention pour obtenir un meilleur taux d'extinction. La figure 3a correspond au cas standard d'un signal de modulation NRZ où les temps de maintien à '0' où à '1' sont égaux c'est à dire quand le rapport de maintien à 1 est égal à 1, le rapport de maintien à 1 étant égal à

$$\text{Rapport de Maintien 1} = \frac{2x\text{Temps de maintien à 1}}{\text{Temps Bit - Temps de Transition}}$$

Le rapport de transition représentant quant à lui la fraction du temps bit nécessaire pour passer d'un niveau à l'autre, égal à 0,44 dans le cas de la figure 3A est donné par

$$\text{Rapport de transition} = \frac{\text{Temps de Transition}}{\text{Temps Bit}}$$

L'invention consiste à induire une déformation plus en moins accentuée des temps de maintien de façon à garder plus longtemps le signal au niveau '0' donc à augmenter le temps d'extinction du dispositif de transmission optique. Ceci est illustré dans les figures 3B et 3C à différents niveaux. Ainsi la figure 3B montre un signal avec un rapport de maintien à 1 égal à 0,43 alors que la figure 3C illustre le cas ou ce même rapport est de 0.

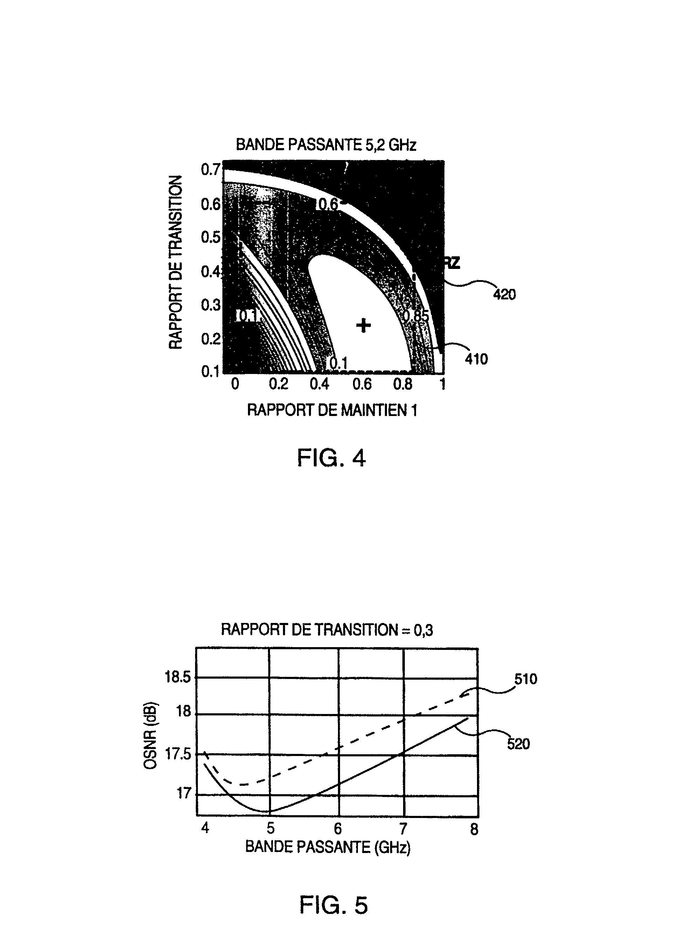

L'avantage obtenu doit être quantifié précisément par des mesures appropriées réalisées par des spécialistes des transmissions optiques. Ainsi la figure 4 montre l'OSNR limite entraînant un taux d'erreur plancher de $10^{-9}$, ceci en fonction de la bande équivalente de bruit du filtre électrique du récepteur lors de la détection d'un signal modulé suivant le mode de l'invention à un débit de 10 Gbit/s. Pour cette figure le rapport de transition est fixé à 0.3. Il est important que cette valeur soit identique pour les deux modes de modulation comparés car cela montre bien que dans les deux cas le modulateur à exactement la même vitesse. Pour un temps de maintien à 1 égal à 0.5 la courbe montre que la valeur limite de l'OSNR est inférieure de 0.5 dB à celle obtenue pour un signal modulé suivant le mode NRZ classique (temps de maintien à 1 égal à 1 représenté par la courbe. Ces courbes sont applicables pour un débit quelconque dès que le rapport entre la bande équivalente de bruit et la fréquence de base du débit est respecté. Ainsi on peut également dire que le mode de modulation suivant l'invention rend l'optimisation des récepteurs opto-électroniques plus aisée puisqu'ils ont alors une plus grande tolérance au bruit optique pour une bande équivalente de bruit plus petite.

L'avantage obtenu peut également se mesurer par une mesure standard de qualité d'une transmission optique. Ce facteur s'appelle le facteur Q ou facteur Qualité de la transmission. Des appareils de mesure standards existent permettant notamment de tracer des courbes comme celles montrées sur la figure 5 où le facteur de qualité est exprimé d'une part, en fonction du rapport de maintien à 1 et, d'autre part, en fonction du rapport de transition. Pour établir cette figure la bande équivalente de bruit est choisie optimale, c'est à dire à 5 GHz pour un signal modulé à 10 Gbit/ s. La figure 5 indique clairement aux spécialistes des transmissions optiques qu'il existe une zone selon l'invention où le facteur de qualité est meilleur, c'est à dire plus élevé, que celui obtenu avec la modulation NRZ standard dont la position dans ce graphique est rappelée pour comparaison. Ceci est obtenu pour des gammes de valeurs de rapport de transition et de temps de maintien à 1 différentes de celles de la méthode ordinaire et il y a donc avantage à les utiliser pour améliorer les transmissions utilisant la modulation NRZ. Cette aire déterminée par un rapport de maintien à 1 est compris entre 0,1 et 0,85 (en abscisse), pour un rapport de transition compris entre 0,1 à 0,6 (en ordonnée).

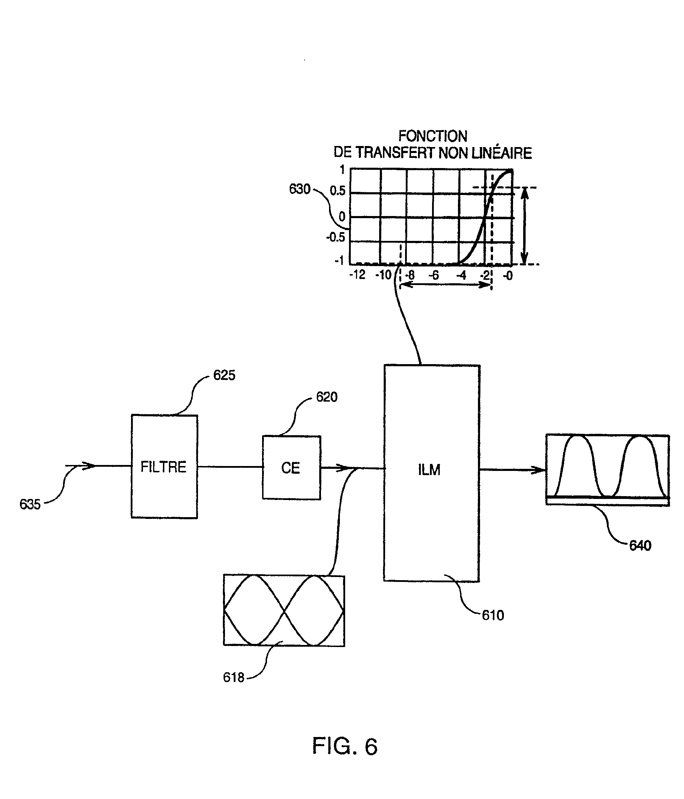

La figure 6 indique comment l'invention peut être mise en oeuvre d'une façon générale étant entendu que de nombreuses variantes peuvent être considérés par les spécialistes sans sortir du cadre de l'invention. L'émetteur de lumière (610) est ici un modulateur laser désigné sous l'acronyme d'ILM pour 'Integrated LASER modulator'. Ce dispositif reçoit un signal de commande (618) fourni par l'unité de commande électrique (620) pour mettre en forme le signal à l'entrée du modulateur. Ce signal doit être, selon l'invention, à faible bande passante au regard de la vitesse de la transmission avec, notamment, des temps de transition contrôlés. Ceci est de préférence obtenu par un moyen approprié tel qu'un filtre électrique analogique ou numérique (625), par exemple un filtre dit de Bessel du 5ème ordre dont le but est de transformer selon les principes de l'invention, le signal de données (635) généré par la logique de commande située en amont. En ce qui concerne l'ILM, il est caractérisé, dans ce mode préféré de mise en oeuvre de l'invention, par une fonction de transfert non linéaire (630) de façon à obtenir un signal optique résultant (640) ayant toutes les caractéristiques souhaitées comme discuté dans ce qui précède. Ces caractéristiques permettent à la modulation NRZ, quand elle est mise en oeuvre selon ces principes, d'étendre ainsi son emploi au delà de son champs d'application traditionnel.

Le système dévoilé par l'invention permet d'obtenir une meilleure qualité de transmission sur une fibre optique tout en gardant le mode de modulation dit NRZ. Alors qu'il existe d'autres modes de modulation qui sont plus performants. C'est en effet le mode dit NRZ qui est le plus simple à mettre en oeuvre et donc le plus économique, facteur prépondérant de choix lors d'une utilisation en grand nombre. L'invention convient bien pour la commande des émetteurs de lumière de type LASER qui doivent simplement être éteints ou allumés selon qu'un niveau '1' ou '0' doit être transmis. L'invention compense, par une mise en forme appropriée du signal optique, la faiblesse intrinsèque du mode NRZ quand il faut transmettre un niveau '0' isolé dans une suite de '1' et qui devient de ce fait plus difficilement détectable.

**Revendications**

1. Modulateur optique pour la transmission de données encodées en mode NRZ par modulation de l'intensité d'un signal lumineux, comprenant des moyens pour mettre en forme ledit signal lumineux, **caractérisé en ce que** lesdits moyens incluent:

   - des moyens de mise en forme (625, 620) pour obtenir un signal de faible bande passante (618) à partir du signal de commande d'entrée (635), et
   - un modulateur laser (610) ayant une fonction de transfert (630) favorisant le temps d'extinction du signal lumineux résultant (640).

2. Modulateur optique selon la revendication 1, **caractérisé en ce que**:

   - le rapport de la durée de la transition dudit signal lumineux résultant pour passer niveau minimum d'intensité lumineuse au niveau maximum d'intensité lumineuse à la durée du temps bit dudit signal, est compris entre 0,1 et 0,6, et
   - le rapport de la durée du temps de maintien au niveau maximum d'intensité à la durée totale du temps bit diminuée de la durée de la transition entre le niveau minimum d'intensité lumineuse et le niveau maximum d'intensité lumineuse, est compris entre 0,1 et 0,85.

3.  Modulateur optique selon la revendication 1 ou 2, **caractérisé en ce que** lesdits moyens de mise en forme comprennent principalement un filtre électrique analogique ou numérique (625).

4.  Modulateur optique selon la revendication 3, **caractérisé en ce que** ledit filtre est un filtre de Bessel du 5ème ordre.

5.  Modulateur optique selon la revendication 3, **caractérisé en ce que** lesdits moyens de mise en forme comprennent en outre une unité de commande électrique (620) pour mettre en forme le signal de sortie dudit filtre électrique (625).

FIG. 1

FIG. 2

6

FIG. 3A

FIG. 3B

FIG. 3C

FIG. 4

FIG. 5

FONCTION
DE TRANSFERT NON LINÉAIRE

FIG. 6